# EUROPEAN PATENT SPECIFICATION

(11) **EP 2 980 911 B1**
(45) Date of publication and mention of the grant of the patent: **06.06.2018**
(21) Application number: 14774455.1
(22) Date of filing: 26.03.2014
(51) Int. Cl.: H01M 10/0585, H01M 2/18, H01M 4/13, H01M 4/62, H01M 2/16, H01M 10/052, H01M 10/058

(54) **NON-AQUEOUS ELECTROLYTE SECONDARY BATTERY**
SEKUNDÄRBATTERIE MIT WASSERFREIEM ELEKTROLYT
BATTERIE SECONDAIRE À ÉLECTROLYTE NON AQUEUX

(30) Priority: 26.03.2013 JP 2013065240
(43) Date of publication of application: 03.02.2016
(73) Proprietor: NISSAN MOTOR CO., LTD., Yokohama-shi, Kanagawa 220-8623 (JP); Automotive Energy Supply Corporation, Zama-shi, Kanagawa 252-0012 (JP)
(72) Inventor: HONDA, Takashi, Atsugi-shi Kanagawa 243-0123 (JP); HAGIYAMA, Kousuke, Atsugi-shi Kanagawa 243-0123 (JP); YAMAGUCHI, Ryuuta, Atsugi-shi Kanagawa 243-0123 (JP); MATSUZAKI, Ikuma, Atsugi-shi Kanagawa 243-0123 (JP); MINEO, Norikazu, Atsugi-shi Kanagawa 243-0123 (JP); SHIMAMURA, Osamu, Zama-shi Kanagawa 252-0012 (JP); MATSUMOTO, Keisuke, Zama-shi Kanagawa 252-0012 (JP)
(74) Representative: Grünecker Patent- und Rechtsanwälte PartG mbB
(86) International application number: PCT/JP2014/058689
(87) International publication number: WO 2014/157421

(56) References cited:
- WO-A1-99/48163
- JP-A- 2004 296 305
- JP-A- 2006 525 624
- JP-A- 2007 026 730
- JP-A- 2011 100 602
- JP-A- 2012 099 369
- JP-A- 2012 099 369
- JP-A- 2012 099 385
- KR-A- 20130 026 373

## Description

### Technical Field

The present invention relates to a non-aqueous electrolyte secondary battery.

### Background Art

In recent years, developments of electric vehicles (EV), hybrid electric vehicles (HEV) and fuel cell vehicles (FCV) have been advanced against the background of escalating environmental protection movement. For a power source for driving motors used on those vehicles, a rechargeable secondary battery is suitable. In particular, what is attracting the attention is a non-aqueous electrolyte secondary battery such as a lithium-ion secondary battery expected to provide high capacity and high output.

A non-aqueous electrolyte secondary battery generally includes a battery element in which a positive electrode having a positive electrode active material layer containing a positive electrode active material (for example, a lithium-transition metal composite oxide or the like) and a negative electrode having a negative electrode active material layer containing a negative electrode active material (for example, a carbonaceous material such as graphite, or the like) are laminated to interpose a separator therebetween.

A binder for binding an active material which is used for an active material layer is classified into an organic solvent-based binder (binder which is not dissolved/dispersed in water but dissolved/dispersed in an organic solvent) and an aqueous binder (a binder which is dissolved/dispersed in water). The organic solvent-based binder can be industrially disadvantageous due to high cost such as raw material cost for an organic solvent, recovery cost, and cost relating to waste processing. Meanwhile, the aqueous binder has an advantage of lowering a burden on environment and greatly suppressing an investment on facilities of a production line, since water as a raw material is conveniently available and only water vapor is generated during drying. The aqueous binder also has an advantage that, since the aqueous binder has a high binding effect even with a small amount compared to an organic solvent-based binder, it can increase a ratio of an active material per same volume so that a negative electrode with high capacity can be achieved.

Various attempts to form a negative electrode using an aqueous binder as a binder for binding the active material have been made since an aqueous binder has such an advantage. For example, a non-aqueous electrolyte secondary battery using a styrene-butadiene rubber (SBR) which is an aqueous binder as the binder for negative electrode is disclosed in Patent Documents 1 and 2. Patent Documents 3 and 4 disclose non-aqueous electrolyte secondary batteries comprising porous layers in order to either enhance the heat resistance or shutdown characteristics or to control the ion conductivity.

### Citation List

### Patent Document

Patent Document 1 JP 2010-529634 W
Patent Document 2 JP 2012-099385 A
Patent Document 3 JP 2012-099369 A
Patent Document 4 KR 2013-0026373 A

### Summary of Invention

### Technical Problem

However, it has been found that the amount of gas generated from the electrode in a non-aqueous electrolyte secondary battery. including a negative electrode active material layer using an aqueous binder increases more than that in the case of using an organic solvent-based binder. The battery characteristics may be affected by the gas when the amount of gas generated is great, and the battery capacity may decrease in some cases particularly in the case of using the battery for a long period of time.

Accordingly, an object of the present invention is to provide a non-aqueous electrolyte secondary battery which can efficiently discharge the gas generated to the outside of the electrode and exhibits a low decrease in battery capacity even when used for a long period of time in the case of using an aqueous binder as the binder of the negative electrode active material layer.

### Solution to Problem

The present inventors have conducted extensive studies to solve the above problem. As a result, it has been found out that the above problem can be solved by providing a highly porous layer having a specific porosity and a specific thickness between the negative electrode active material layer and the separator, whereby the present invention has been completed.

In other words, the present invention relates to a non-aqueous electrolyte secondary battery which includes a power generating element including a positive electrode obtained by forming a positive electrode active material layer on the surface of a positive electrode current collector, a negative electrode obtained by forming a negative electrode active material layer on the surface of a negative electrode current collector, and a separator. In the non-aqueous electrolyte secondary battery according to the present invention, the negative electrode active material layer contains an aqueous binder and a highly porous layer having a porosity that is higher than that of the separator is provided between the negative electrode active material layer and the separator, the porosity of the highly porous layer being from 50 to 90%. In addition, a ratio of a thickness of the highly porous layer to a thickness of the negative electrode active material layer is from 0.01 to 0.4 and a ratio of a battery area to rated capacity is 5 cm²/Ah or more, the battery area representing the maximum value of projected area of the battery including an outer casing of the battery, and the rated capacity is 3 Ah or more.

### Brief Description of Drawings

Fig. 1 is a cross-sectional view schematically illustrating the basic constitution of a non-aqueous electrolyte lithium ion secondary battery as one embodiment of an electric device, in which the non-aqueous electrolyte lithium ion secondary battery is a flat type (stack type) and not a bipolar type.
Fig. 2A is a top view of a non-aqueous electrolyte lithium ion secondary battery as one preferred embodiment of the present invention.
Fig. 2B is a diagram seen from the arrow direction of A in Fig. 2A.

### Description of Embodiments

The present invention is a flat-type non-aqueous electrolyte secondary battery which includes a power generating element including a positive electrode obtained by forming a positive electrode active material layer on the surface of a positive electrode current collector, a negative electrode obtained by forming a negative electrode active material layer on the surface of a negative electrode current collector, and a separator, in which the negative electrode active material layer contains an aqueous binder, a highly porous layer having a porosity that is higher than that of the
separator is provided between the negative electrode active material layer and the separator, the porosity of the highly porous layer being from 50 to 90%, a ratio of a thickness of the highly porous layer to a thickness of the negative electrode active material layer is from 0.01 to 0.4, and a ratio of a battery area to rated capacity is 5 cm²/Ah or more, the battery area representing the maximum value of projected area of the battery including an outer casing of the battery, and the rated capacity is 3 Ah or more.

According to the present invention, it is possible to move the gas generated on the surface of the negative electrode at the time of the initial charge and discharge via the highly porous layer by providing the highly porous layer having a specific porosity between the negative electrode active material layer and the separator. In addition, it is possible to quickly discharge the gas generated to the outside of the battery element by controlling the thickness of the highly porous layer to a predetermined range. Hence, it is possible to obtain a non-aqueous electrolyte secondary battery which can suppress a heterogeneous reaction on the surface of the negative electrode and has a low decrease in battery capacity even when used for a long period of time even in the case of using an aqueous binder from which a great amount of gas is generated as compared with an organic solvent-based binder.

As described above, the aqueous binder can use water as the solvent used at the time of producing the active material layer and thus has various advantages and also exhibits strong binding force to bind the active material. However, the present inventors found out that there was a problem that the amount of gas generated at the time of the initial charge and discharge increases when using an aqueous binder in the negative electrode active material layer as compared with the negative electrode using an organic solvent-based binder. It is considered that this is because water as the solvent
used when dissolving (dispersing) the aqueous binder remains in the electrode, this water is decomposed to be gas, and thus the amount of gas generated from the aqueous binder increases than the organic solvent-based binder. By such generation of gas, the discharge capacity of the battery when the battery is used over a long period of time is lowered as compared with the discharge capacity of the battery at the time of the initial state in the case of using an aqueous binder in the negative electrode active material layer. It is considered that this is because the gas remains on the active material layer by the generation of gas and thus the formation of the SEI film on the surface of the negative electrode becomes non-uniform. An outer casing material is easily deformed particularly in the case of using a laminate as the outer casing material, thus the gas is likely to remain in the power generating element, and the heterogeneous reaction increases and it is difficult to secure a long-term cycle service life of the battery.

The non-aqueous electrolyte secondary battery used as a power source for motor drive of a motor vehicle or the like is required to have a large size and significantly high output characteristics as compared with a consumer non-aqueous electrolyte secondary battery used in cellular phones, notebook personal computers, or the like. In the stack type laminate battery for a motor vehicle which has a capacity per unit cell of from several times to several ten times the consumer battery, the electrode is increased in size for an improvement in energy density so as to meet such a demand, thus the amount of gas generated further increases, and further a heterogeneous reaction on the negative electrode is also likely to proceed.

As a result of extensive investigations based on the above findings, the configuration of the present invention was completed on the basis of an approach that the gas generated might be able to be efficiently discharged to the outside of the system if a passage for gas was constructed in the vicinity of the surface of the negative electrode and a mechanism to discharge the gas to the outside of the power generating element was fabricated. In the present invention, the passage for the gas generated on the surface of the negative electrode at the time of the initial charge and discharge is constructed by providing the highly porous layer having a specific porosity between the negative electrode active material layer and the separator. Furthermore, it is considered that the gas is quickly discharged from the surface of the negative electrode to the outside of the system via the highly porous layer by controlling the thickness of the highly porous layer to a predetermined range. In other words, the configuration of the present invention is that the gas generated is smoothly discharged to the outside of the system by properly fabricating a passage for gas in a vertical direction of the electrode and a passage for gas in an in-plane direction of the electrode and thus the battery performance is improved.

Next, a description will be made of a non-aqueous electrolyte lithium ion secondary battery as a preferred embodiment of the non-aqueous electrolyte secondary battery, but it is not limited thereto. Meanwhile, the same elements are given with the same symbols for the descriptions of the drawings, and overlapped descriptions are omitted. Further, note that dimensional ratios in the drawings are exaggerated for the description, and are different from actual ratios in some cases.

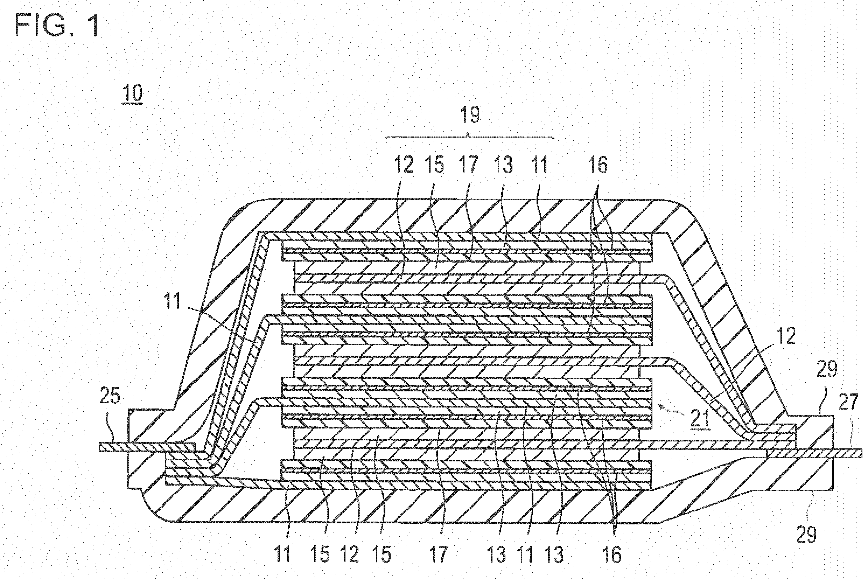

Fig. 1 is a cross-sectional view schematically illustrating the basic constitution of a non-aqueous electrolyte lithium ion secondary battery which is a flat type (stack type) and not a bipolar type (hereinbelow, it is also simply referred to as a "stack type battery"). As illustrated in Fig. 1, the stack type battery 10 according to this embodiment has a structure in which a power generating element 21 with a substantially rectangular shape, in which a charge and discharge reaction actually occurs, is sealed inside of a battery outer casing material 29 as an outer casing. Herein, the power generating element 21 has a constitution in which a positive electrode, the separator 17, and a negative electrode are stacked. Meanwhile, the battery 10 of the present embodiment has a highly porous layer 16 between the negative electrode and the separator 17, and the separator 17 and the highly porous layer 16 have a non-aqueous electrolyte (for example, liquid electrolyte) therein. The positive electrode has a structure in which the positive electrode active material layer 15 is disposed on both surfaces of the positive electrode current collector 12. The negative electrode has a structure in which the negative electrode active material layer 13 is disposed on both surfaces of the negative electrode current collector 11. Specifically, one positive electrode active material layer 15 and the neighboring negative electrode active material layer 13 are disposed to face each other via the separator 17, and the negative electrode, the electrolyte layer, and the positive electrode are stacked in this order. Accordingly, the neighboring positive electrode, electrolyte layer and negative electrode form one single battery layer 19. It can be also said that, as plural single barrier layers 19 are stacked, the stack type battery 10 illustrated in Fig. 1 has a constitution in which electrically parallel connection is made among them.

Meanwhile, on the outermost layer negative electrode current collector which is present on both outermost layers of the power generating element 21, the negative electrode active material layer 13 is disposed only on a single surface. However, an active material layer may be formed on both surfaces. Namely, not only a current collector exclusive for an outermost layer in which an active material layer is formed on a single surface can be achieved but also a current collector having an active material layer on both surfaces can be directly used as a current collector of an outermost layer. Furthermore, by reversing the arrangement of the positive electrode and negative electrode of Fig. 1, it is also possible that the outer most layer positive electrode current collector is disposed on both outermost layers of the power generating element 21 and a positive electrode active material layer is disposed on a single surface or both surfaces of the same outermost layer positive electrode current collector.

The positive electrode current collector 12 and negative electrode current collector 11 have a structure in which each of the positive electrode current collecting plate (tab) 27 and negative electrode current collecting plate (tab) 25, which conductively communicate with each electrode (positive electrode and negative electrode), is attached and inserted to the end part of the battery outer casing material 29 so as to be led to the outside of the battery outer casing material 29. If necessary, each of the positive electrode current collecting plate 27 and negative electrode current collecting plate 25 can be attached, via a positive electrode lead and negative electrode lead (not illustrated), to the positive electrode current collector 12 and negative electrode current collector 11 of each electrode by ultrasonic welding or resistance welding.

The battery of the present embodiment is equipped with a highly porous layer 16 to be described later between the negative electrode active material layer 13 and the separator 17.

Meanwhile, although a stack type battery which is a flat type (stack type), not a bipolar type is illustrated in Fig. 1, it can be also a bipolar type battery containing a bipolar type electrode which has a positive electrode active material layer electrically bound to one surface of a current collector and a negative electrode active material layer electrically bound to the opposite surface of the current collector. In that case, one current collector plays both roles of a positive electrode current collector and a negative electrode current collector.

Hereinbelow, each member is described in more detail.

### [Negative electrode active material layer]

The negative electrode active material layer contains a negative electrode active material. Examples of the negative electrode active material include a carbon material such as graphite, soft carbon, and hard carbon, a lithium-transition metal composite oxide (for example, Li₄Ti₅O₁₂), a metal material, and a lithium alloy-based negative electrode material. If necessary, two or more kinds of a negative electrode active material may be used in combination. Preferably, from the viewpoint of capacity and output characteristics, a carbon material or a lithium-transition metal composite oxide is used as a negative electrode active material. Meanwhile, it is needless to say that a negative electrode active material other than those described above can be also used.

The average particle diameter of each active material contained in the negative electrode active material layer is, although not particularly limited, preferably 1 to 100 µm, and more preferably 1 to 30 µm from the viewpoint of having high output.

The negative electrode active material layer includes at least an aqueous binder. Meanwhile, the aqueous binder has an advantage of lowering a burden on environment and greatly suppressing an investment on facilities of a production line, since water as a raw material is conveniently available and only water vapor is generated during drying. In addition, it is not required to use an expensive organic solvent for dissolving or dispersing the binder and thus it is possible to cut down the cost.

The aqueous binder indicates a binder with which water is used as a solvent or a dispersion medium, and specific examples thereof include a thermoplastic resin, a polymer with rubber elasticity, a water soluble polymer, and a mixture thereof. Herein, the binder with which water is used as a dispersion medium includes all expressed as latex or an emulsion, and it indicates a polymer emulsified in water or suspended in water. Examples thereof include a polymer latex obtained by emulsion polymerization in a self-emulsifying system.

Specific examples of the aqueous binder include a styrene polymer (styrene-butadiene rubber, styrene-vinyl acetate copolymer, styrene-acrylic copolymer or the like), acrylonitrile-butadiene rubber, methyl methacrylate-butadiene rubber, (meth) acrylic polymer (polyethylacrylate, polyethylmethacrylate, polypropylacrylate, polymethylmethacrylate (methyl methacrylate rubber), polypropylmethacrylate, polyisopropylacrylate, polyisopropylmethacrylate, polybutylacrylate, polybutylmethacrylate, polyhexylacrylate, polyhexylmethacrylate, polyethylhexylacrylate, polyethylhexylmethacrylate, polylaurylacrylate, polylaurylmethacrylate, or the like), polytetrafluoroethylene, polyethylene, polypropylene, ethylene-propylene copolymer, polybutadiene, butyl rubber, fluororubber, polyethylene oxide, polyepichlorohydrin, polyphosphazene, polyacrylonitrile, polystyrene, ethylene-propylene-diene copolymer, polyvinylpyridine, chlorosulfonated polyethylene, a polyester resin, a phenol resin, an epoxy resin; polyvinyl alcohol (average polymerization degree is preferably 200 to 4,000, and more preferably 1,000 to 3,000, and saponification degree is preferably 80% by mol or more, and more preferably 90% by mol or more) and a modified product thereof (1 to 80% by mol saponified product in a vinyl acetate unit of a copolymer with ethylene/vinyl acetate = 2/98 to 30/70 (molar ratio), 1 to 50% by mol partially acetalized product of polyvinyl alcohol, or the like), starch and a modified product thereof (oxidized starch, phosphoric acid esterified starch, cationized starch, or the like), cellulose derivatives (carboxymethyl cellulose, methyl cellulose, hydroxypropyl cellulose, hydroxyethyl cellulose, and a salt thereof), polyvinylpyrrolidone, polyacrylic acid (salt), polyethylene gylcol, copolymer of (meth)acrylamide and/or (meth)acrylic acid salt [(meth)acrylamide polymer, (meth)acrylamide-(meth) acrylic acid salt copolymer, (meth) acrylic acid alkyl (carbon atom number of 1 to 4) ester-(meth) acrylic acid salt copolymer, or the like], styrene-maleic acid salt copolymer, mannich modified product of polyacrylamide, formalin condensation type resin (urea-formalin resin, melamin-formalin resin or the like), polyamidepolyamine or dialkylamine-epichlorohydrin copolymer, polyethyleneimine, casein, soybean protein, synthetic protein, and a water soluble polymer such as galactomannan derivatives. The aqueous binder can be used either singly or in combination of two or more types.

It is preferable that the aqueous binder contains at least one rubber-based binder selected from the group consisting of a styrene-butadiene rubber, an acrylonitrile-butadiene rubber, a methyl methacrylate-butadiene rubber, and a methyl methacrylate rubber from the viewpoint of binding property. Furthermore, the aqueous binder preferably contains a styrene-butadiene rubber due to its favorable binding property.

It is preferable to concurrently use the water-soluble polymer from the viewpoint of an improvement in coating property in the case of using a rubber-based binder such as a styrene-butadiene rubber as the aqueous binder. Examples of the suitable water-soluble polymer to be concurrently used with the styrene-butadiene rubber may include a polyvinyl alcohol and any modified product thereof, starch and any modified product thereof, cellulose derivatives (carboxymethylcellulose, methylcellulose, hydroxyethylcellulose, and any salt thereof), polyvinyl pyrrolidone, polyacrylic acid (salt), or polyethylene glycol. Among them, it is preferable to combine the styrene-butadiene rubber with carboxymethylcellulose as the binder. The mass ratio of the contents of the rubber-based binder (for example, a styrene-butadiene rubber) and the water-soluble polymer is not particularly limited, but the rubber-based binder (for
example, styrene-butadiene rubber) : water-soluble polymer is preferably 1 : 0.3 to 1.6.

Among the binders used in the negative electrode active material layer, the content of the aqueous binder is preferably from 80 to 100% by mass, preferably from 90 to 100% by mass, and preferably 100% by mass. Examples of a binder other than the aqueous binder may include the binders used in the positive electrode active material layer to be described later.

The amount of the binder contained in the negative electrode active material layer is not particularly limited as long as it is an amount in which the active material can be bound, and the amount is preferably from 0.5 to 15% by mass, more preferably 1 to 10% by mass, and particularly preferably from 2 to 4% by mass with respect to the active material layer.

If necessary, the negative electrode active material layer further contains other additives such as a conductive aid, an electrolyte (for example, polymer matrix, ion conductive polymer, and electrolyte solution), and lithium salt for enhancing ion conductivity.

The conductive aid means an additive which is blended in order to enhance the conductivity of the positive electrode active material layer or negative electrode active material layer. As the conductive aid, for example, there can be mentioned carbon materials such as carbon black including acetylene black; graphite; and carbon fiber. When the active material layer contains a conductive aid, an electron network is formed effectively in the inside of the active material layer, and it can contribute to improvement of the output characteristics of a battery.

Examples of the electrolyte salt (lithium salt) include Li(C₂F₅SO₂)₂N, LiPF₆, LiBF₄, LiClO₄, LiAsF₆, and LiCF₃SO₃.

Examples of the ion conductive polymer include polyethylene oxide (PEO)-based polymer and polypropylene oxide (PPO) -based polymer.

A blending ratio of the components that are contained in the negative electrode active material layer and the positive electrode active material layer described below is not particularly limited. The blending ratio can be adjusted by suitably referring the already-known knowledge about a lithium ion secondary battery. The thickness of each active material layer is not particularly limited either, and reference can be made to the already-known knowledge about a battery. For example, the thickness of each active material layer is about 2 to 100 µm.

The method of manufacturing a negative electrode is not particularly limited, and for example, there may be used a method including preparing a slurry of a negative electrode active material by mixing the components constituting the negative electrode active material layer including a negative electrode active material and an aqueous binder, and an aqueous solvent that is a solvent for adjusting the viscosity of slurry; applying the slurry on the surface of a current collector to be described later; drying the slurry; and then, pressing.

The aqueous solvent as a solvent for adjusting the viscosity of slurry is not particularly limited, and it is possible to use an aqueous solvent that is conventionally known. For example, it is possible to use water (pure water, ultrapure water, distilled water, ion-exchanged water, ground water, well water, service water (tap water), and the like), a mixed solvent of water and an alcohol (for example, ethyl alcohol, methyl alcohol, isopropyl alcohol, or the like), or the like. However, in the present embodiment, the aqueous solvent is not limited thereto, but it is possible to appropriately select and use an aqueous solvent that is conventionally known as long as the working effects of the present embodiment are not impaired.

The blending amount of the aqueous solvent is not also particularly limited, and the aqueous solvent may be blended in an appropriate amount so that the slurry of a negative electrode active material has a viscosity in the desired range.

The basis weight of the slurry of a negative electrode active material at the time of coating it on a current collector is not particularly limited, but it is preferably from 0.5 to 20 g/m² and more preferably from 1 to 10 g/m². It is possible to obtain a negative electrode active material layer having a proper thickness when the basis weight is in the above range. The coating method is also not particularly limited, and examples thereof may include a knife coater method, a gravure coater method, a screen printing method, a wire bar method, a die coater method, a reverse roll coater method, an inkjet method, a spray method, and a roll coater method.

The method for drying the slurry of a negative electrode active material after coating is also not particularly limited, and for example, a method such as warm air drying can be used. The drying temperature is, for example, from 30 to 150°C and the drying time is, for example, from 2 seconds to 50 hours.

The thickness of the negative electrode active material layer obtained in this manner is not particularly limited as long as a ratio between the thickness of the negative electrode active material layer and the thickness of the highly porous layer to be described later is in a predetermined value range, and the thickness of the negative electrode active material layer is, for example, from 2 to 100 µm and more preferably from 3 to 30 µm.

The density of the negative electrode active material layer is not particularly limited, but it is preferably from 1.4 to 1.6 g/cm³. It is easy for the gas generated to escape from the inside of the electrode and it is possible to increase the long-term cycle characteristics of the battery when the density of the negative electrode active material layer is 1.6 g/cm³ or less. In addition, the negative electrode active material obtains sufficient communicating property and high electron conductivity is obtained when the density of the negative electrode active material layer is 1.4 g/cm³ or more, and thus the battery performance can be improved. The density of the negative electrode active material layer is preferably from 1.42 to 1.53 g/cm³ from the viewpoint that the effect of the present invention is further exerted. Incidentally, the density of the negative electrode active material layer represents the mass of the active material layer per unit volume. Specifically, the density can be determined by taking out the negative electrode active material layer from the battery, removing the solvent and the like present in the electrolyte solution and the like, then determining the volume of the electrode from the long side, short side, and height thereof, measuring the weight of the active material layer, and then dividing the weight by the volume.

### [Positive electrode active material layer]

The positive electrode active material layer contains a positive electrode active material, and if necessary, it further contains other additives such as a conductive aid, a binder, an electrolyte (for example, polymer matrix, ion conductive polymer, and electrolyte solution), and lithium salt for enhancing ion conductivity.

The positive electrode active material layer contains a positive electrode active material. Examples of the positive electrode active material include a lithium-transition metal composite oxide such as LiMn₂O₄, LiCoO₂, LiNiO₂, Li(Ni-Mn-Co)O₂, or a compound in which part of the transition metals is replaced with other element, a lithium-transition metal phosphate compound, and a lithium-transition metal sulfate compound. Depending on the case, two or more kinds of a positive electrode active material can be used in combination. As a preferred example, a lithium-transition metal composite oxide is used as a positive electrode active material from the viewpoint of capacity and output characteristics. As a more preferred example, Li(Ni-Mn-Co)O₂ and a compound in which part of the transition metals is replaced with other element (hereinbelow, also simply referred to as the "NMC composite oxide") are used. The NMC composite oxide has a layered crystal structure in which a lithium atom layer and a transition metal (Mn, Ni, and Co are arranged with regularity) atom layer are alternately stacked via an oxygen atom layer, one Li atom is included per atom of transition metal M and an amount of extractable Li is twice the amount of spinel lithium manganese oxide, that is, as the supply ability is two times higher, it can have high capacity.

As described above, the NMC composite oxide includes a composite oxide in which part of transition metal elements are replaced with other metal element. In that case, examples of other element include Ti, Zr, Nb, W, P, Al, Mg, V, Ca, Sr, Cr, Fe, B, Ga, In, Si, Mo, Y, Sn, V, Cu, Ag, and Zn. Preferably, it is Ti, Zr, Nb, W, P, Al, Mg, V, Ca, Sr, or Cr. More preferably, it is Ti, Zr, P, Al, Mg, or Cr. From the viewpoint of improving the cycle characteristics, it is even more preferably Ti, Zr, Al, Mg, or Cr.

By having high theoretical discharge capacity, the NMC composite oxide preferably has a composition represented by General Formula (1) : LiₐNi_{b}Mn_{c}Co_{d}MxO₂ (with the proviso that, in the formula, a, b, c, d, and x satisfy 0.9 ≤ a ≤ 1.2, 0 <b <1, 0 <c ≤ 0.5, 0 <d ≤ 0.5, 0 ≤ x ≤ 0.3, and b + c + d = 1. M represents at least one element selected from Ti, Zr, Nb, W, P, Al, Mg, V, Ca, Sr, and Cr) . Herein, a represents the atomic ratio of Li, b represents the atomic ratio of Ni, c represents the atomic ratio of Mn, d represents the atomic ratio of Co, and x represents the atomic ratio of M. From the viewpoint of the cycle characteristics, it is preferable that 0.4 ≤ b ≤ 0.6 in General Formula (1). Meanwhile, composition of each element can be measured by inductively coupled plasma (ICP) atomic emission spectrometry.

In general, from the viewpoint of improving purity and improving electron conductivity of a material, nickel (Ni), cobalt (Co) and manganese (Mn) are known to contribute to capacity and output characteristics. Ti or the like replaces part of transition metal in a crystal lattice. From the viewpoint of the cycle characteristics, it is preferable that part of transition element are replaced by other metal element, and it is preferable that 0 < x ≤ 0.3 in General Formula (1), in particular. By solid-dissolving at least one selected from the group consisting of Ti, Zr, Nb, W, P, Al, Mg, V, Ca, Sr and Cr, the crystal structure is stabilized so that a decrease in capacity of a battery is prevented even after repeated charge and discharge, and thus, it is believed that excellent cycle characteristics can be achieved.

As a more preferred embodiment, b, c, and d in General Formula (1) satisfy 0.44 ≤ b ≤ 0.51, 0.27 ≤ c ≤ 0.31, and 0.19 ≤ d ≤ 0.26 from the viewpoint of having excellent balance between capacity and durability.

Meanwhile, it is needless to say that a positive electrode active material other than those described above can be also used.

The average particle diameter of the positive electrode active material which is contained in the positive electrode active material layer is, although not particularly limited, preferably 1 to 100 µm, and more preferably 1 to 20 µm from the viewpoint of having high output.

A binder used for the positive electrode active material layer is not particularly limited and the following materials can be mentioned; thermoplastic polymers such as polyethylene, polypropylene, polyethylene terephthalate (PET), polyether nitrile, polyacrylonitrile, polyimide, polyamide, cellulose, carboxymethyl cellulose (CMC) and a salt thereof, an ethylene-vinyl acetate copolymer, polyvinyl chloride, styrene-butadiene rubber (SBR), isoprene rubber, butadiene rubber, ethylene-propylene rubber, an ethylene-propylene-diene copolymer, a styrene-butadiene-styrene block copolymer and a hydrogenated product thereof, and a styrene-isoprene-styrene block copolymer and a hydrogenated product thereof; fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TEF-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFT-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); an epoxy resin, and the like. These binders may be each used singly, or two or more thereof may be used in combination.

The amount of the binder contained in the positive electrode active material layer is not particularly limited as long as it is an amount in which the active material can be bound, and the amount is preferably from 0.5 to 15% by mass and more preferably 1 to 10% by mass with respect to the active material layer.

As the additives other than the binder, it is possible to use the same ones as those in the section for the negative electrode active material layer described above.

### [Separator]

A separator has a function of maintaining an electrolyte to ensure lithium ion conductivity between a positive electrode and a negative electrode and also a function of a partition wall between the positive electrode and the negative electrode.

In the present invention, the escape of the gas generated is improved by providing a highly porous layer which has a specific porosity and the thickness thereof to the thickness of the negative electrode active material layer in a predetermined value range between the negative electrode active material layer and the separator. It is also required to consider the discharge of the gas that has escaped from the negative electrode active material layer and reached the separator in order to further improve the discharge of gas. From such a viewpoint, it is more preferable that the air permeability and porosity of the separator are in appropriate ranges.

Specifically, the air permeability (Gurley value) of the separator is preferably 200 (second/100cc) or less. As the air permeability of the separator is 200 (second/100cc) or less, the release of the gas generated at the time of an initial charge is improved so that the battery can have good capacity retention rate after cycles and also, sufficient short circuit preventing property as a function of the separator and sufficient mechanical properties of the separator can be obtained. Although the lower limit of the air permeability is not particularly limited, it is generally 300 (second/100cc) or more. The air permeability of the separator is a value measured by the method of JIS P8117 (2009).

In addition, the porosity of the separator is not limited as long as it is lower than that of the highly porous layer to be described later, but it is preferably from 40 to 65%, more preferably 40% or more and less than 60%, and even more preferably 40% or more and less than 50%. As the porosity of the separator is from 40 to 65%, the escape of the gas generated at the time of the initial charge is improved, a battery exhibiting a favorable capacity retention after cycles is obtained, and also sufficient short-circuit preventing property as a function of the separator and sufficient mechanical properties of the separator can be obtained. Meanwhile, as for the porosity, a value obtained as a volume ratio from the density of a raw material resin of a separator and the density of a separator as a final product is used. For example, when the density of a raw material resin is ρ and volume density of a separator is p', it is described as follows: porosity = 100 x (1-ρ'/ρ).

Examples of a separator shape include a porous sheet separator or a non-woven separator composed of a polymer or a fiber which absorbs and maintains the electrolyte.

As a porous sheet separator composed of a polymer or a fiber,
a microporous (microporous membrane) separator can be used, for example. Specific examples of the porous sheet composed of a polymer or a fiber include a microporous (microporous membrane) separator which is composed of polyolefin such as polyethylene (PE) and polypropylene (PP) ; a laminate in which plural of them are laminated (for example, a laminate with three-layer structure of PP/PE/PP), and a hydrocarbon based resin such as polyimide, aramid, or polyvinylidene fluoride -hexafluoropropylene (PVdF-HFP), or glass fiber.

The thickness of the microporous (microporous membrane) separator cannot be uniformly defined as it varies depending on use of application. For example, for an application in a secondary battery for driving a motor of an electric vehicle (EV), a hybrid electric vehicle (HEV), and a fuel cell vehicle (FCV), it is preferably 4 to 60 µm as a monolayer or a multilayer. Fine pore diameter of the microporous (microporous membrane) separator is preferably 1 µm or less at most (in general, the pore diameter is about several tens of nanometer).

As a non-woven separator, conventionally known ones such as cotton, rayon, acetate, nylon, polyester; polyolefin such as PP and PE; polyimide and aramid are used either singly or as a mixture. Furthermore, the volume density of a non-woven fabric is not particularly limited as long as sufficient battery characteristics are obtained with an impregnated polymer gel electrolyte. In addition, the thickness of a non-woven separator may be the same as an electrolyte layer, but preferably, 5 to 200 µm and more preferably 10 to 100 µm.

### [Highly porous layer]

The non-aqueous electrolyte secondary battery of the present embodiment is equipped with a highly porous layer 16 between the negative electrode active material layer 13 and the separator 17.

The highly porous layer 16 has a higher porosity than the separator 17, and the porosity of the highly porous layer 16 is from 50 to 90%. As the battery is equipped with such a highly porous layer, the gas generated on the surface of the negative electrode at the time of the initial charge and discharge can move via the highly porous layer 16 and thus the discharge of gas is facilitated. It is not possible to sufficiently secure the flow path for the gas when the porosity of the highly porous layer 16 is lower than 50%, and thus it is difficult to efficiently remove the gas. In addition, it is difficult to obtain sufficient mechanical strength when the porosity exceeds 90%. In addition, the contact area between the highly porous layer and the surface of the negative electrode or separator which contacts with the highly porous layer decreases, and thus the highly porous layer is easily peeled off. In particular, there is a problem that the charge and discharge during the cycle is likely to be affected. In the battery of the present embodiment, it is more preferable that the porosity of the highly porous layer is from 60 to 80%. The porosity of the highly porous layer is calculated from a change in the basis weight and thickness of the substrate before and after the highly porous layer is formed thereon and the specific gravity of the highly porous layer.

In addition, in the battery of the present embodiment, a ratio of a thickness of the highly porous layer 16 to a thickness of the negative electrode active material layer 13 (thickness of highly porous layer/thickness of negative electrode active material layer) in the unit battery layer is in a range of from 0.01 to 0.4. As the ratio of the thickness of the highly porous layer to the thickness of the negative electrode active material layer is set to be in the above range, it is possible to efficiently discharge the gas generated on the surface of the negative electrode to the outside of the power generating element and to prevent uneven forming of a coating film. It is not possible to sufficiently obtain the effect of the present invention to discharge the gas generated on the surface of the negative electrode when the proportion of the thickness of the highly porous layer to the thickness of the negative electrode active material layer is less than 0.01. In addition, the ion permeability decreases and thus the output of the battery decreases when the ratio of the thickness of the highly porous layer to the thickness of the negative electrode active material layer exceeds 0.4. In the battery of the present embodiment, the ratio of the thickness of the highly porous layer to the thickness of the negative electrode active material layer is preferably from 0.05 to 0.15.

The material for the highly porous layer is not particularly limited as long as the material has a function to hold the electrolyte and thus to secure the lithium ion conductivity between the positive electrode and the negative electrode and a function as a partition wall between the positive electrode and the negative electrode. Preferably, it is possible to use those which contain heat resistant particles having a melting point or a thermal softening point of 150°C or higher and particularly 240°C or higher. As such a material exhibiting high heat resistance is used, it is possible to stably discharge the gas to the outside of the power generating element even in a case where the internal temperature of the battery is high. In addition, it is possible to obtain a battery in which a decrease in performance due to an increase in temperature hardly occurs.

In addition, the heat resistant particles are preferably those which exhibit electrical insulating property, are stable with respect to the electrolyte solution or the solvent used at the time of forming the highly porous layer, and further are electrochemically stable so as to be hardly oxidized or reduced in the operating voltage range of the battery. The heat resistant particles may be inorganic particles or organic particles but are preferably inorganic particles from the viewpoint of stability. In addition, the heat resistant particles are preferably fine particles from the viewpoint of dispersibility, and it is possible to use fine particles having a secondary particle diameter of, for example, from 100 nm to 4 µm, preferably from 300 nm to 3 µm, and even more preferably from 500 nm to 3 µm. The shape of the heat resistant particles is not also particularly limited, and it may be a shape close to a spherical shape or in the form of a plate, a rod, or a needle.

The inorganic particles (inorganic powder) having a melting point or a thermal softening point of 150°C or higher are not particularly limited, but examples thereof may include particles such as an inorganic oxide including iron oxide (FeO), SiO₂, Al₂O₃, aluminosilicate, TiO₂, BaTiO₂, or ZrO₂; an inorganic nitride including aluminum nitride or silicon nitride; a sparingly soluble ionic crystal including calcium fluoride, barium fluoride, or barium sulfate; a covalent crystal including silicon or diamond; and clays including montmorillonite. The inorganic oxide may be a material derived from a mineral resource such as boehmite, zeolite, apatite, kaolin, mullite, spinel, olivine, or mica or any artificial material thereof. In addition, the inorganic particles may be particles to which electrical insulating property is imparted by covering the surface of an electrically conductive material including a metal; an electrically conductive oxide such as SnO₂ or tin-indium oxide (ITO) ; or a carbonaceous material such as carbon black or graphite with a material exhibiting electrical insulating property, for example, the above inorganic oxide. Among them, the particles of an inorganic oxide is suitable since it is possible to easily coat the particles of an inorganic oxide as a slurry dispersed in water on the negative electrode active material layer or the separator and thus to fabricate the highly porous layer by a simple method. Among the inorganic oxides, Al₂O₃, SiO₂ and aluminosilicate are particularly preferable.

Examples of the organic particles (organic powder) having a melting point or a thermal softening point of 150°C or higher may include particles of an organic resin such as various crosslinked polymer particles including crosslinked polymethyl methacrylate, crosslinked polystyrene, crosslinked polydivinylbenzene, a crosslinked product of styrene-divinylbenzene copolymer, a polyimide, a melamine resin, a phenol resin, and a benzoguanamine-formaldehyde condensate or heat resistant polymer particles including a polysulfone, polyacrylonitrile, polyaramide, polyacetal, and a thermoplastic polyimide. In addition, the organic resin (polymer) constituting these organic particles may be any mixture, any modified product, any derivative, any copolymer (a random copolymer, an alternating copolymer, a block copolymer, a graft copolymer), or any crosslinked body (in the case of the heat resistant polymer fine particles) of the materials exemplified above. Among them, it is desirable to use particles of crosslinked polymethyl methacrylate or polyaramid as the organic particles from the viewpoint of industrial productivity and electrochemical stability. It is possible to fabricate a highly porous layer mainly composed of a resin as such particles of an organic resin is used, and thus a lightweight battery as a whole can be obtained.

Incidentally, the heat resistant particles as described above may be used singly or in combination of two or more kinds thereof.

The highly porous layer preferably contains a binder. The binder plays a role to bind the heat resistant particles together. The highly porous layer is stably formed and prevented from being peeled off by this binder.

The binder used in the highly porous layer is not particularly limited, and those conventionally known can be appropriately employed by those skilled in the art. For example, a compound such as carboxymethylcellulose (CMC), polyacrylonitrile, cellulose, an ethylene-vinyl acetate copolymer, polyvinyl chloride, a styrene-butadiene rubber (SBR), an isoprene rubber, a butadiene rubber, polyvinylidene fluoride (PVdF), polytetrafluoroethylene (PTFE), polyvinyl fluoride (PVF), or methyl acrylate can be used as the binder. Among these, it is preferable to use carboxymethylcellulose (CMC), methyl acrylate, or polyvinylidene fluoride (PVDF) . Only one kind of these compounds may be used singly or two or more kinds thereof may be used concurrently.

The content of the binder in the highly porous layer is preferably from 2 to 20% by mass with respect to 100% by mass of the highly porous layer. It is possible to increase the peeling strength between the highly porous layer and the separator when the content of the binder is 2% by mass or more, and thus it is possible to improve the vibration resistance of the battery. On the other hand, the gap between the heat resistant particles is properly kept when the content of the binder is 20% by mass or less, and thus it is possible to secure sufficient lithium ion conductivity.

The thickness for one layer fraction of the highly porous layer is preferably from 1 to 20 µm, more preferably from 2 to 10 µm, and even more preferably from 3 to 7 µm. It is preferable that when the thickness of the highly porous layer is in such a range, because the bulk and weight of the highly porous layer itself are not too great as well as a sufficient strength being obtained.

The method to laminate the highly porous layer between the negative electrode active material layer and the separator is not particularly limited. For example, first the heat resistant particles and the binder if necessary are dispersed in a solvent to prepare a dispersion. (1) The dispersion thus obtained is coated on the surface of the negative electrode active material layer (one or both surfaces of negative electrode) and the solvent is dried to form a negative electrode having a highly porous layer on the surface . Alternatively, (2) the above dispersion is coated on one surface of the separator and the solvent is dried to form a separator having a highly porous layer on the surface.

As the solvent used at this time, for example, N-methyl-2-pyrrolidone (NMP), dimethylformamide, dimethylacetamide, methylformamide, cyclohexane, hexane, water and the like are used. It is preferable to use NMP as the solvent in the case of employing polyvinylidene fluoride (PVdF) as the binder.

The method to coat the above dispersion on the surface of the negative electrode or the separator is also not particularly limited, and examples thereof may include a knife coater method, a gravure coater method, a screen printing method, a Meyer bar method, a die coater method, a reverse roll coater method, an inkjet method, a spray method, and a roll coater method.

The temperature to remove the solvent after coating the dispersion is not particularly limited, and it can be appropriately set depending on the solvent used. For example, it is preferably from 50 to 70°C in the case of using water as the solvent, it is preferably from 70 to 90°C in the case of using NMP as the solvent. The solvent may be dried under reduced pressure, if necessary. In addition, the solvent may not be completely removed and a part thereof may remain.

(1) It is possible to fabricate a battery having a highly porous layer between the negative electrode active material layer and the separator by sequentially laminating the separator and the positive electrode on the negative electrode obtained in this manner to have a highly porous layer on the surface of the negative electrode active material layer. Alternatively, (2) it is possible to fabricate a battery having a highly porous layer between the negative electrode active material layer and the separator by laminating the separator having a highly porous layer on the surface such that the surface on which the highly porous layer is coated is on the negative electrode side.

### (Electrolyte layer)

The battery according to the present embodiment can constitute a single battery layer of the battery 10 illustrated in Fig. 1 by holding the electrolyte at the part of the separator (and the highly porous layer) to form the electrolyte layer. The electrolyte constituting the electrolyte layer is not particularly limited, and it is possible to appropriately use a liquid electrolyte and a polymer electrolyte such as a polymer gel electrolyte. The means to hold the electrolyte at the part of the separator (and the highly porous layer) is not particularly limited, and for example, a means such as impregnation, coating, spraying can be applied.

The liquid electrolyte has a function as a lithium ion carrier. The liquid electrolyte which constitutes the electrolyte layer has the form in which a lithium salt as a supporting salt is dissolved in an organic solvent as a plasticizer. Examples of the organic solvent which can be used include carbonates such as ethylene carbonate (EC), propylene carbonate (PC), dimethyl carbonate (DMC), diethyl carbonate (DEC), and ethylmethyl carbonate. Furthermore, as the lithium salt, the compound which can be added to an active material layer of an electrode such as Li(CF₃SO₂)₂N, Li(C₂F₅SO₂)₂N, LiPF₆, LiBF₄, LiClO₄, LiAsF₆, LiTaF₆, and LiCFₐSO₃ can be similarly used. The liquid electrolyte may further contain an additive in addition to the components that are described above. Specific examples of the compound include vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, allylethylene carbonate, vinyloxymethylethylene carbonate, allyloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, and 1,1-dimethyl-2-methyleneethylene carbonate. Among them, vinylene carbonate, methylvinylene carbonate, and vinylethylene carbonate are preferable. Vinylene carbonate and vinylethylene carbonate are more preferable. Those cyclic carbonate esters may be used either singly or in combination of two or more types.

As the polymer electrolyte, a gel polymer electrolyte (gel electrolyte) containing an electrolyte solution can be preferably used.

The gel polymer electrolyte has a constitution that the aforementioned liquid electrolyte is injected to a matrix polymer (host polymer) consisting of an ion conductive polymer. Using a gel polymer electrolyte as an electrolyte is excellent in that the fluidity of an electrolyte disappears and ion conductivity between each layer is blocked. Examples of an ion conductive polymer which is used as a matrix polymer (host polymer) include polyethylene oxide (PEO), polypropylene oxide (PPO), and a copolymer thereof. An electrolyte salt such as lithium salt can be dissolved well in those polyalkylene oxide polymers.

According to forming of a cross-linked structure, the matrix polymer of a gel electrolyte can exhibit excellent mechanical strength. For forming a cross-linked structure, it is sufficient to perform a polymerization treatment of a polymerizable polymer for forming a polymer electrolyte (for example, PEO and PPO), such as thermal polymerization, UV polymerization, radiation polymerization, and electron beam polymerization, by using a suitable polymerization initiator.

### [Current collector]

The material for forming a current collector is not particularly limited, but metal is preferably used.

Specific examples of the metal include aluminum, nickel, iron, stainless, titanium, copper, and other alloys. In addition to them, a clad material of a nickel and aluminum, a clad material of copper and aluminum, or a plating material of a combination of those metals can be preferably used. It can be also a foil obtained by coating aluminum on a metal surface. Among them, from the viewpoint of electron conductivity or potential for operating a battery, aluminum, stainless, and copper are preferable.

The size of the current collector is determined based on use of a battery. When it is used for a large-size battery which requires high energy density, for example, a current collector with large area is used. The thickness of the current collector is not particularly limited, either. The thickness of the current collector is generally about 1 to 100 µm.

### [Positive electrode current collecting plate and negative electrode current collecting plate]

The material for forming the current collecting plate (25, 27) is not particularly limited, and a known highly conductive material which has been conventionally used for a current collecting plate for a lithium ion secondary battery can be used. Preferred examples of the material for forming a current collecting plate include metal material such as aluminum, copper, titanium, nickel, stainless steel (SUS) and an alloy thereof. From the viewpoint of light weightiness, resistance to corrosion, and high conductivity, aluminum and copper are preferable. Aluminum is particularly preferable. Meanwhile, the same material or a different material can be used for the positive electrode current collecting plate 27 and the negative electrode current collecting plate 25.

### [Positive electrode lead and negative electrode lead]

Further, although it is not illustrated, the current collector 11, 12 and the current collecting plate (25, 27) can be electrically connected to each other via a positive electrode lead or a negative electrode lead. The same material used for a lithium ion secondary battery of a related art can be also used as a material for forming a positive electrode lead and a negative electrode lead. Meanwhile, a portion led out from a casing is preferably coated with a heat resistant and insulating thermally shrunken tube or the like so that it has no influence on a product (for example, an automobile component, in particular, an electronic device or the like) by electric leak after contact with neighboring instruments or wirings.

### [Battery outer casing]

As for the battery outer casing 29, an envelope-shaped casing which is able to cover a power generating element and for which a laminate film including aluminum is used, may be used in addition to a known metal can casing. As for the laminate film, a laminate film with a three-layer structure formed by laminating PP, aluminum and nylon in this order can be used, but not limited thereto. From the viewpoint of having high output and excellent cooling performance, and of being suitably usable for a battery for a large instrument such as EV or HEV, a laminate film is preferable. In addition, the outer casing is more preferably an aluminate laminate since it is possible to easily adjust the group pressure to be applied from the outside to the power generating element and it is easy to adjust the thickness of electrolyte layer to the desired thickness.

It is preferable that the internal volume of the outer casing is greater than the volume of the power generating element. Here, the internal volume of the outer casing refers to the volume of the inside of the outer casing after sealing the power generating element in the outer casing but before subjecting the outer casing to evacuation. In addition, the volume of the power generating element is the part that is spatially occupied by the power generating element, and the volume includes the pore portion in the power generating element. The volume that can store the gas when the gas is generated is present as the internal volume of the outer casing is greater than the volume of the power generating element. Hence, the gas is smoothly discharged to the outside of the system, the gas generated is less likely to affect the battery behavior, and battery characteristics are improved. In addition, a surplus part that is capable of storing the gas in the outer casing in a case where gas is generated is present to constantly keep the volume of the power generating element, and thus it is possible to maintain the distance between the electrodes constantly and to keep a uniform reaction going. It is preferable that the internal volume of the outer casing is great to some extent so as to be able to store the gas, and specifically, it is preferable that the internal volume of the outer casing is greater than the volume of the power generating element by from 0.03 to 0.12 volume fraction of the volume of the power generating element excluding the pore portion.

The effect of the present invention that the gas generated is efficiently discharged to the outside of the battery is more effectively exerted in the case of a large-area battery from which a great amount of gas is generated. Hence, in the present invention, it is preferable that the battery structure obtained by covering the power generating element with the outer casing is large in the sense that the effect of the present invention can be further exerted. In addition, the battery is preferably a flat laminated type battery since it is easy to uniformly discharge the gas in a surface direction. Specifically, it is preferable that the negative electrode active material layer has a rectangular shape, and a length of a short side of the relevant rectangle is 100 mm or more. Such battery with a large size can be used for an application in automobile. Herein, the length of a short side of a negative electrode active material layer indicates the length of the shortest side in each electrode. Herein, the upper limit of the length of a short side of the battery structure is, although not particularly limited, generally 250 mm or less.

It is also possible to determine the large size of a battery in view of a relationship between battery area or battery capacity, from the viewpoint of a large-size battery, which is different from a physical size of an electrode. For example, in the case of a flat and stack type laminated battery, the value of the ratio of a battery area (the maximum value of projected area of the battery including an outer casing of the battery) to rated capacity is 5 cm²/Ah or more, and for a battery with rated capacity of 3 Ah or more, the battery area per unit capacity is large so that uneven forming of a coating film (SEI) on a surface of the negative electrode active material is easily facilitated. For such reasons, a problem of having lowered battery characteristics (in particular, service life characteristics after long-term cycle) may become more significant for a large-size battery in which an aqueous binder such as SBR is used for forming a negative electrode active material layer. The non-aqueous electrolyte secondary battery according to this embodiment is preferably a large-size battery as described above from the viewpoint of having a larger merit by exhibition of the working effects of the present invention. Furthermore, an aspect ratio of a rectangular electrode is preferably 1 to 3, and more preferably 1 to 2. Meanwhile, the aspect ratio of an electrode is defined by a longitudinal/transversal ratio of a positive electrode active material layer with a rectangular shape. By having the aspect ratio in this range, an advantage of further suppressing an occurrence of uneven film can be obtained according to the present invention in which use of an aqueous binder is essential, as the gas can be evenly released in a surface direction.

### [Group pressure applied to power generating element]

In the present embodiment, the group pressure applied to a power generating element is preferably 0.07 to 0.7 kgf/cm²(6.86 to 68.6 kPa). By applying pressure to a power generating element to have the group pressure of 0.07 to 0.7 kgf/cm², the gas can be released better to an outside of the system, and also as extra electrolyte solution in the battery does not much remain between the electrodes, and thus
an increase in cell resistance can be suppressed. In addition, as the battery swelling is suppressed, good cell resistance and capacity retention rate after long-term cycle are obtained. More preferably, the group pressure applied to a power generating element is 0.1 to 0.7 kgf/cm² (9.80 to 68.6 kPa). Herein, the group pressure indicates an external force applied to a power generating element. The group pressure applied to a power generating element can be easily measured by using a film type pressure distribution measurement system. In the present specification, the value measured by using the film type pressure distribution measurement system manufactured by Tekscan, INC is used.

Although it is not particularly limited, control of the group pressure can be made by applying directly or indirectly external force to a power generating element by physical means, and controlling the external force. As for the method for applying the external force, it is preferable to use a pressure member which can apply pressure to an outer casing. Namely, one preferred embodiment of the present invention is a non-aqueous electrolyte secondary battery which further has a pressure member for applying pressure to an outer casing such that the group pressure applied to the power generating element is 0.07 to 0.7 kgf/cm².

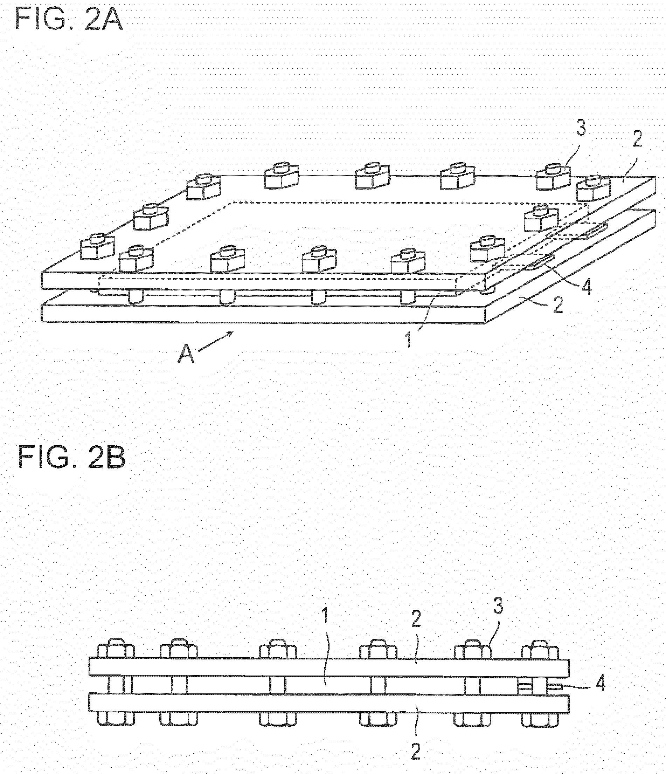

Fig. 2A is a top view of a non-aqueous electrolyte lithium ion secondary battery as one preferred embodiment of the present invention and Fig. 2B is a diagram seen from the arrow direction of A in Fig. 2A. The outer casing with the enclosed power generating element 1 has a flat rectangular shape, and the electrode tab 4 is drawn from the lateral side of the outer casing for extracting electric power. The power generating element is covered by the battery outer casing with its periphery fused by heat. The power generating element is sealed in a state in which the electrode tab 4 is led to the outside. Herein, the power generating element corresponds to the power generating element 21 of the lithium ion secondary battery 10 illustrated in Fig. 1 as described above. In Fig 2, 2 represents a SUS plate as a pressure member, 3 represents a fixing jig as a fixing member, and 4 represents an electrode tab (negative electrode tab or positive electrode tab). The pressure member is disposed for the purpose of controlling the group pressure applied to power generating element to 0.07 to 0.7 kgf/cm². Examples of the pressure member include a rubber material such as urethane rubber sheet, a metal plate such as aluminum and SUS, a resin film such as PP. Furthermore, from the viewpoint of having continuous application of constant pressure on a power generating element by a pressure member, it is preferable to have additionally a fixing member for fixing a pressure member. Furthermore, by controlling the fixing of a fixing jig onto a pressure member, the group pressure applied to a power generating element can be easily controlled.

Meanwhile, drawing of the tab illustrated in Fig. 2 is not particularly limited, either. The positive electrode tab and the negative electrode tab may be drawn from two lateral sides, or each of the positive electrode tab and negative electrode tab may be divided into plural tabs and drawn from each side, and thus it is not limited to the embodiment illustrated in Fig. 2.

Incidentally, the non-aqueous electrolyte secondary battery described above can be produced by a production method that is conventionally known.

### [Assembled battery]

An assembled battery is formed by connecting plural batteries. Specifically, at least two of them are used in series, in parallel, or in series and parallel. According to arrangement in series or parallel, it becomes possible to freely control the capacity and voltage.

It is also possible to form a detachable small-size assembled battery by connecting plural batteries in series or in parallel. Furthermore, by connecting again plural detachable small-size assembled batteries in series or parallel, an assembled battery having high capacity and high output, which is suitable for a power source for operating a vehicle requiring high volume energy density and high volume output density or an auxiliary power source, can be formed. The number of the connected batteries for fabricating an assembled battery or the number of the stacks of a small-size assembled battery for fabricating an assembled battery with high capacity can be determined depending on the capacity or output of a battery of a vehicle (electric vehicle) for which the battery is loaded.

### [Vehicle]

The above-described non-aqueous electrolyte secondary battery and an assembled battery using the same has excellent output characteristics and can maintain discharge capacity even when it is used for a long period of time, and thus has good cycle characteristics. For use in a vehicle such as an electric vehicle, a hybrid electric vehicle, a fuel cell electric vehicle, or a hybrid fuel cell electric vehicle, long service life is required as well as high capacity and large size compared to use for an electric and mobile electronic device. The above-described non-aqueous electrolyte secondary battery and an assembled battery using the same can be preferably used as a power source for a vehicle, for example, as a power source for operating a vehicle or as an auxiliary power source.

Specifically, the battery or an assembled battery formed by combining plural batteries can be mounted on a vehicle. According to the present invention, a battery with excellent long term reliability, output characteristics, and long service life can be formed, and thus, by mounting this battery, a plug-in hybrid electric vehicle with long EV driving distance and an electric vehicle with long driving distance per charge can be achieved. That is because, when the battery or an assembled battery formed by combining plural batteries is used for, for example, a vehicle such as hybrid car, fuel cell electric car, and electric car (including two-wheel vehicle (motor bike) or three-wheel vehicle in addition to all four-wheel vehicles (automobile, truck, commercial vehicle such as bus, compact car, or the like)), a vehicle with long service life and high reliability can be provided. However, the use is not limited to a vehicle, and it can be applied to various power sources of other transportation means, for example, a moving object such as an electric train, and it can be also used as a power source for loading such as an uninterruptable power source device.

### Examples

Hereinafter, the present invention will be described in more detail with reference to Examples and Comparative Examples, but it is not only limited to the following Examples at all.

### <Examples 1 to 7>

### (Preparation of electrolyte solution)

A mixed solvent (30 : 30 : 40 (volume ratio)) of ethylene carbonate (EC), ethylmethyl carbonate (EMC), and diethyl carbonate (DEC) was used as a solvent. In addition, 1.0 M LiPF₆ was used as the lithium salt. The electrolyte solution was prepared by adding vinylene carbonate at 2% by mass with respect to 100% by mass of the total mass of the solvent and the lithium salt. Incidentally, the "1.0M LiPF₆" means that the concentration of a supporting salt (LiPF₆) in the mixture of the mixed solvent and the supporting salt is 1.0 M.

### (Fabrication of positive electrode)

A solid matter composed of 85% by mass of LiMn₂O₄ (average particle diameter: 15 µm) as a positive electrode active material, 5% by mass of acetylene black as a conductive aid, and 10% by mass of PVdF as a binder was prepared. An appropriate amount of N-methyl-2-pyrrolidone (NMP) as a solvent for adjusting the viscosity of slurry was added to this solid matter to prepare the slurry of a positive electrode active material. Next, the slurry of a positive electrode active material was coated on both surfaces of an aluminum foil (20 µm) as a current collector and then dried and pressed, thereby fabricating the positive electrodes having a coating amount for one surface of 5, 10, 20, and 25 mg/cm² and a thickness for one surface of the negative electrode active material layer of 60, 95, 170, and 210 µm.

### (Fabrication of SBR-based negative electrode)

A solid matter composed of 95% by mass of artificial graphite (average particle diameter: 20 µm) as a negative electrode active material, 2% by mass of acetylene black as a conductive aid, 2% by mass of SBR and 1% by mass of CMC as the binder was prepared. An appropriate amount of ion exchanged water as a solvent for adjusting the viscosity of slurry was added to this solid matter to prepare the slurry of a negative electrode active material. Next, the slurry of a negative electrode was coated on both surfaces of a copper foil (15 µm) of a current collector and then dried and pressed, thereby fabricating the negative electrodes having a coating amount (basis weight) for one surface of 1.5, 6.0, and 7.5 mg/cm² and a thickness for one surface of the negative electrode active material layer of 25, 95, and 115 µm.

### (Formation of highly porous layer on negative electrode)

On the negative electrode fabricated in the above, Al₂O₃ was coated so as to have a thickness of 3, 6, and 9 µm and a porosity of 50, 70, and 90% as presented in Table 1, thereby fabricating the negative electrodes having a highly porous layer, respectively. Specifically, an NMP dispersion body containing alumina particles (BET specific surface area: 1 m²/g) at 95 parts by mass and polymethyl acrylate (acrylic binder) as a binder at 5 parts by mass were prepared. Thereafter, this aqueous dispersion body was coated on the surface of the negative electrode using a blade coater to obtain the highly porous layer.

### (Completing process of single battery)

The positive electrode layer was cut into a rectangular shape of 187 × 97 mm, and the negative electrode layer was cut into a rectangular shape of 191 × 101 mm (15 sheets of positive electrode layer, 16 sheets of negative electrode layer). The ratio of the long side to the short side of the negative electrode active material layer serving as the electrode surface was 1.9. The positive electrode and the negative electrode were alternately laminated via a separator (microporous polyolefin membrane, thickness: 25 µm, porosity: 45%) of 195 × 103 mm. The rated capacity of the batteries fabricated in this manner was 6.3 Ah (Examples 5 and 6), 12.7 Ah (Example 7), 25.4 Ah (Examples 1 to 3), and 42.9 Ah (Example 4), respectively, and the ratio of the battery area to the rated capacity was 42.3 cm²/Ah (Examples 5 and 6), 21.2 cm²/Ah (Example 7), 10.6 cm²/Ah (Examples 1 to 3), and 6.3 cm²/Ah (Example 4), respectively.

The tabs were welded to each of these positive electrodes and negative electrodes, and the battery was enclosed in an outer casing formed of an aluminum laminate film together with the electrolyte solution. The battery was interposed between a urethane rubber sheet (thickness: 3 mm) larger than the electrode area and an Al plate (thickness: 5 mm) and pressurized, thereby completing the single battery.

### <Examples 8 to 12>

### (Preparation of electrolyte solution)

The preparation of the electrolyte solution was carried out in the same procedure as in Examples 1 to 7 described above.

### (Fabrication of positive electrode)

The fabrication of the positive electrode was carried out in the same procedure as in Examples 1 to 7 described above.

### (Fabrication of SBR-based negative electrode)

The fabrication of the SBR-based negative electrode was carried out in the same procedure as in Examples 1 to 7 described above.

### (Formation of highly porous layer on separator)

A highly porous layer containing alumina was formed on the separator instead of forming a highly porous layer on the negative electrode.

First, a separator (microporous polyolefin membrane, thickness: 25 µm, porosity: 45%) of 250 × 250 mm was prepared. An NMP dispersion body containing alumina particles (BET specific surface area: 1 m²/g) at 95 parts by mass and polymethyl acrylate (acrylic binder) as a binder at 5 parts by mass was prepared. Subsequently, this aqueous dispersion body was coated on one surface of the separator using a blade coater such that the highly porous layer had a thickness of 5 µm and a porosity of 50, 70, or 90%, thereby fabricating the highly porous layer.

### (Completing process of single battery)

The positive electrode layer was cut into a rectangular shape of 195 × 185 mm, and the negative electrode layer was cut into a rectangular shape of 200 × 190 mm (15 sheets of positive electrode layer, 16 sheets of negative electrode layer). The separator with highly porous layer was cut into a size of 203 mm × 193 mm. The ratio of the long side to the short side of the negative electrode active material layer serving as the electrode surface was 1.05. These positive electrodes and the negative electrodes were alternately laminated via the separator fabricated in the above to have a highly porous layer such that the surface on which the highly porous layer was formed was on the negative electrode side. The rated capacity of the batteries fabricated in this manner was 21.5 Ah (Example 9), 121.2 Ah (Examples 10 and 12), and 173.5 Ah (Example 11), respectively, and the ratio of the battery area to the rated capacity was 22.4 cm²/Ah (Example 9), 4.0 cm²/Ah (Examples 10 and 12), and 2.8 cm²/Ah (Example 11), respectively.

The tabs were welded to each of these positive electrodes and negative electrodes, and the battery was enclosed in an outer casing formed of an aluminum laminate film together with the electrolyte solution. The battery was interposed between a urethane rubber sheet (thickness: 3 mm) larger than the electrode area and an Al plate (thickness: 5 mm) and pressurized, thereby completing the single battery.

### <Comparative Examples 1 to 5>

The batteries were fabricated in the same manner as in Examples 1 to 7 except that the highly porous layer was not fabricated on the negative electrode. However, in Comparative Example 4, the positive electrode layer was cut into a rectangular shape of 195 × 185 mm, the negative electrode layer was cut into a rectangular shape of 200 × 190 mm (15 sheets of positive electrode layer, 16 sheets of negative electrode layer), and the ratio of the long side to the short side of the negative electrode active material layer was 1.05. In addition, a separator (microporous polyolefin membrane, thickness: 25 µm, porosity: 45%) of 203 × 193 mm was used.

The rated capacity of the batteries fabricated in this manner was 21.5 Ah (Comparative Example 1), 51.8 Ah (Comparative Example 2), 121.2 Ah (Comparative Examples 3 and 4), and 173.5 Ah (Comparative Example 5), respectively, and the ratio of the battery area to the rated capacity was 22.4 cm²/Ah (Comparative Example 1), 9.3 cm²/Ah (Comparative Example 2), 4.0 cm²/Ah (Comparative Examples 3 and 4), and 2.8 cm²/Ah (Comparative Example 5), respectively.

### <Comparative Examples 6 to 8>

### (Preparation of electrolyte solution)

The preparation of the electrolyte solution was carried out in the same procedure as in Examples 1 to 7 described above.

### (Fabrication of positive electrode)

The fabrication of the positive electrode was carried out in the same procedure as in Examples 1 to 7 described above.

### (Fabrication of PVdF-based negative electrode)

A solid matter composed of 92% by mass of artificial graphite (average particle diameter: 20 µm) as the negative electrode active material, 2% by mass of acetylene black as the conductive aid, and 2% by mass of PVdF as the binder was prepared. An appropriate amount of N-methyl-2-pyrrolidone (NMP) as a solvent for adjusting the viscosity of slurry was added to this solid matter to prepare the negative electrode slurry. Next, the negative electrode slurry was coated on both surfaces of a copper foil (15 µm) as a current collector and then dried and pressed, thereby fabricating the negative electrodes having a coating amount (basis weight) for one surface of 1.5 or 6.0 mg/cm² and a thickness for one surface of the negative electrode active material layer of 25 or 95 µm.

### (Completing process of single battery)

In Comparative Examples 6 and 7, the positive electrode layer was cut into a rectangular shape of 187 × 97 mm, the negative electrode layer was cut into a rectangular shape of 191 × 101 mm (15 sheets of positive electrode layer, 16 sheets of negative electrode layer) in the same manner as in Examples 1 to 7. The ratio of the long side to the short side of the negative electrode active material layer was 1. 9. These positive electrodes and the negative electrodes were alternately laminated via a separator (microporous polyolefin membrane, thickness: 25 µm, porosity: 45%) of 195 × 103 mm.

In Comparative Example 8, the positive electrode layer was cut into a rectangular shape of 195 × 185 mm, the negative electrode layer was cut into a rectangular shape of 200 × 190 mm (15 sheets of positive electrode layer, 16 sheets of negative electrode layer). The ratio of the long side to the short side of the negative electrode active material layer was 1.05. In addition, a separator (microporous polyolefin membrane, thickness: 25 µm, porosity: 45%) of 203 × 193 mm was used. Other conditions were carried out by the same technique as in Examples 1 to 7.

The rated capacity of the batteries fabricated in this manner was 6.3 Ah (Comparative Example 6), 25.4 Ah (Comparative Example 7), and 121.2 Ah (Comparative Example 8), respectively, and the ratio of the battery area to the rated capacity was 42.3 cm²/Ah (Comparative Example 6), 10.6 cm²/Ah (Comparative Example 7), and 4.0 cm²/Ah (Comparative Example 8), respectively.

### <Comparative Example 9>

The battery was fabricated in the same manner as in Example 1 except that a negative electrode having a highly porous layer formed by coating Al₂O₃ so as to have a porosity of 45% was fabricated in (Formation of highly porous layer on negative electrode) of Example 1.

The rated capacity of the battery fabricated in this manner was 25.4 Ah and the ratio of the battery area to the rated capacity was 10.6 cm²/Ah.

### <Comparative Example 10>

The battery was fabricated in the same manner as in Example 1 except that a negative electrode having a highly porous layer formed by coating Al₂O₃ so as to have a porosity of 95% was fabricated in (Formation of highly porous layer on negative electrode) of Example 1.

The rated capacity of the battery fabricated in this manner was 25.4 Ah and the ratio of the battery area to the rated capacity was 10.6 cm²/Ah.

### <Comparative Example 11>

The battery was fabricated in the same manner as in Example 4 except that the highly porous layer was formed on the negative electrode so as to have a thickness of 1 µm.

The rated capacity of the battery fabricated in this manner was 42.9 Ah and the ratio of the battery area to the rated capacity was 6.3 cm²/Ah.

### (Evaluation of battery)

### 1. Initial charge process of single battery

The non-aqueous electrolyte secondary battery (unit battery) fabricated in the above manner was evaluated by a charge and discharge performance test. For this charge and discharge performance test, the initial charge was conducted by holding the battery in a constant temperature bath kept at 25°C for 24 hours. The initial charge of the battery was conducted as follows. The battery was charged to 4.2 V at a current value of 0.05 CA by constant current charge (CC) and then at constant voltage (CV) for 25 hours in total. Thereafter, the battery was held for 96 hours in a constant temperature bath kept at40°C. Thereafter, the battery was discharged to 2.5 V in a constant temperature bath kept at 25°C at a current rate of 1 C and then provided with a rest time of 10 minutes.

### 2. Evaluation of battery

The non-aqueous electrolyte secondary battery (unit battery) fabricated in the above manner was evaluated by an ultrasonic measurement and a charge and discharge performance test.

### (Ultrasonic measurement)

The gas in the power generating element was inspected by conducting the ultrasonic measurement after the initial charge. The density of the power generating element was determined and is presented in the following Table 1 as a relative value with respect to 1 of the density of the battery of Comparative Example 1.

### (Charge and discharge performance test)

For this charge and discharge performance test, the battery temperature was adjusted to 45°C in a constant temperature bath kept at 45°C, and then the performance test was conducted. The charge of the battery was conducted to 4.2 V at a current rate of 1 C by constant current charge (CC) and then charged at constant voltage (CV) for 2.5 hours in total. Thereafter, the battery was provided with a rest time of 10 minutes, then discharged to 2.5 V at a current rate of 1 C, and then provided with a rest time of 10 minutes. The charge and discharge performance test was conducted by adopting these as one cycle. The proportion of the discharge capacity after 300 cycles with respect to the initial discharge capacity was adopted as the capacity retention. The results are presented in Table 1. In Table 1, the capacity retention represents a relative value with respect to 100 of the capacity retention of the battery of Comparative Example 1.

**[Table 1]**

| | Positive electrode | | Negative electrode | | | | Highly porous layer | | Highly porous layer/negative electrode active material layer | Density | Cycle characteristics |
|---|---|---|---|---|---|---|---|---|---|---|---|
| | Basis weight (mg/cm²) | Thickness (µm) | Basis (mg/cm²) | Thickness (µm) | Binder | Long side/short side | Porosity (%) | Thickness (µm) | | | |
| Example 1 | 20 | 170 | 6.0 | 95 | SBR | 1.9 | 50 | 6 | 0.06 | 1.2 | 119 |
| Example 2 | 20 | 170 | 6.0 | 95 | SBR | 1.9 | 70 | 6 | 0.06 | 1.2 | 118 |
| Example 3 | 20 | 170 | 6.0 | 95 | SBR | 1.9 | 90 | 6 | 0.06 | 1.3 | 131 |
| Example 4 | 25 | 210 | 7.5 | 115 | SBR | 1.9 | 70 | 3 | 0.03 | 1.2 | 118 |
| Example 5 | 5 | 60 | 1.5 | 25 | SBR | 1.9 | 70 | 9 | 0.36 | 1.5 | 138 |
| Example 6 | 5 | 60 | 1.5 | 25 | SBR | 1.9 | 70 | 6 | 0.24 | 1.4 | 136 |
| Example 7 | 10 | 95 | 3.0 | 55 | SBR | 1.9 | 70 | 9 | 0.16 | 1.4 | 138 |
| Example 8 | 20 | 170 | 6.0 | 95 | SBR | 1.05 | 50 | 5 | 0.05 | 1.3 | 132 |
| Example 9 | 5 | 60 | 1.5 | 25 | SBR | 1.05 | 70 | 5 | 0.20 | 1.4 | 138 |
| Example 10 | 20 | 170 | 6.0 | 95 | SBR | 1.05 | 70 | 5 | 0.05 | 1.4 | 131 |
| Example 11 | 25 | 210 | 7.5 | 115 | SBR | 1.05 | 70 | 5 | 0.04 | 1.2 | 119 |
| Example 12 | 20 | 170 | 6.0 | 95 | SBR | 1.05 | 90 | 5 | 0.05 | 1.5 | 138 |
| Comparative Example 1 | 5 | 60 | 1.5 | 25 | SBR | 1.9 | - | - | - | 1 | 100 |
| Comparative Example 2 | 10 | 95 | 3.0 | 55 | SBR | 1.9 | - | - | - | 1 | 99 |
| Comparative Example 3 | 20 | 170 | 6.0 | 95 | SBR | 1.9 | - | - | - | 0.9 | 97 |
| Comparative Example 4 | 20 | 170 | 6.0 | 95 | SBR | 1.05 | - | - | - | 0.9 | 98 |
| Comparative Example 5 | 25 | 210 | 7.5 | 115 | SBR | 1.9 | - | - | - | 0.8 | 96 |
| Comparative Example 6 | 5 | 60 | 1.5 | 25 | PVdF | 1.9 | - | - | - | 1.1 | 108 |
| Comparative Example 7 | 20 | 170 | 6.0 | 95 | PVdF | 1.9 | - | - | - | 1.1 | 110 |
| Comparative Example 8 | 20 | 170 | 6.0 | 95 | PVdF | 1.05 | - | - | - | 1.2 | 117 |
| Comparative Example 9 | 20 | 170 | 6.0 | 95 | SBR | 1.9 | 45 | 6 | 0.06 | 1.2 | 107 |
| Comparative Example 10 | 20 | 170 | 6.0 | 95 | SBR | 1.9 | 95 | 6 | 0.45 | 1.4 | 108 |
| Comparative Example 11 | 25 | 210 | 7.5 | 115 | SBR | 1.9 | 70 | 1 | 0.009 | 0.9 | 103 |

From the above results, it can be seen that the batteries of Examples 1 to 12 have a higher density and effectively discharge the gas as compared with the batteries of Comparative Examples 1 to 5 and 9 to 11. In addition, it can be seen that the batteries of Examples 1 to 12 have a high capacity retention after a long-term cycle. In addition, it can be seen that the batteries of Examples 1 to 12 obtain the density and cycle durability of battery which are equal to or higher than those of the batteries of Comparative Examples 6 to 8 using PVdF as an organic solvent-based binder in the negative electrode active material layer.

### Reference Signs List

- 1: Outer casing with enclosed power generating element
- 2: Pressure member
- 3: Fixing member
- 4: Electrode tab
- 10: Lithium ion secondary battery
- 11: Negative electrode current collector
- 12: Positive electrode current collector
- 13: Negative electrode active material layer
- 15: Positive electrode active material layer
- 16: Highly porous layer
- 17: Separator
- 19: Single battery layer
- 21: Power generating element
- 25: Negative electrode current collecting plate
- 27: Positive electrode current collecting plate
- 29: Battery outer casing material

## Claims

1. A flat-type non-aqueous electrolyte secondary battery comprising:
a power generating element comprising
a positive electrode obtained by forming a positive electrode active material layer on a surface of a positive electrode current collector,
a negative electrode obtained by forming a negative electrode active material layer on a surface of a negative electrode current collector, and
a separator, wherein
the negative electrode active material layer comprises an aqueous binder,
a highly porous layer having a porosity that is higher than that of the separator is provided between the negative electrode active material layer and the separator, the porosity of the highly porous layer being from 50 to 90%,
a ratio of a thickness of the highly porous layer to a thickness of the negative electrode active material layer is from 0.01 to 0.4, and
a ratio of a battery area to rated capacity is 5 cm²/Ah or more, the battery area representing the maximum value of projected area of the battery including an outer casing of the battery, and the rated capacity is 3 Ah or more.

2. The non-aqueous electrolyte secondary battery according to claim 1, wherein the highly porous layer comprises heat resistant particles having a melting point or a thermal softening point of 150°C or higher.

3. The non-aqueous electrolyte secondary battery according to claim 1 or 2, wherein the power generating element has a structure sealed by an outer casing and an internal volume of the outer casing is greater than a volume of the power generating element.

4. The non-aqueous electrolyte secondary battery according to any one of claims 1 to 3, wherein the negative electrode active material layer has a rectangular shape and a length of a short side of the rectangular shape is 100 mm or more.

5. The non-aqueous electrolyte secondary battery according to any one of claims 1 to 4, wherein an aspect ratio of an electrode defined by a longitudinal/transversal ratio of a positive electrode active material layer with a rectangular shape is from 1 to 3.

6. The non-aqueous electrolyte secondary battery according to any one of claims 1 to 5, wherein the aqueous binder comprises at least one rubber-based binder selected from the group consisting of a styrene-butadiene rubber, an acrylonitrile-butadiene rubber, a methyl methacrylate-butadiene rubber, and a methyl methacrylate rubber.

7. The non-aqueous electrolyte secondary battery according to claim 6, wherein the aqueous binder comprises a styrene-butadiene rubber.

## Patentansprüche

1. Flache Sekundärbatterie mit nicht-wässrigem Elektrolyten, umfassend:
ein Stromerzeugungselement umfassend
eine positive Elektrode, die durch Bilden einer Aktivmaterialschicht der positiven Elektrode auf einer Oberfläche eines Stromabnehmers der positiven Elektrode erhalten wird,
eine negative Elektrode, die durch Bilden einer Aktivmaterialschicht der negativen Elektrode auf einer Oberfläche eines Stromabnehmers der negativen Elektrode erhalten wird, und
einen Separator, wobei
die Aktivmaterialschicht der negativen Elektrode ein wässriges Bindemittel umfasst,
eine hochporöse Schicht mit einer Porosität, welche höher ist als diejenige des Separators, zwischen der Aktivmaterialschicht der negativen Elektrode und dem Separator bereitgestellt wird, wobei die Porosität der hochporösen Schicht 50 bis 90 % beträgt,
ein Verhältnis einer Dicke der hochporösen Schicht zu einer Dicke der Aktivmaterialschicht der negativen Elektrode 0,01 bis 0,4 beträgt, und
ein Verhältnis einer Batteriefläche zur Nennleistung 5 cm²/Ah oder mehr beträgt, wobei die Batteriefläche den Maximalwert der projizierten Fläche der Batterie einschließlich eines Außengehäuses der Batterie darstellt, und die Nennleistung 3 Ah oder mehr beträgt.

2. Sekundärbatterie mit nicht-wässrigem Elektrolyten gemäß Anspruch 1, wobei die hochporöse Schicht wärmebeständige Partikel mit einem Schmelzpunkt oder einem thermischen Erweichungspunkt von 150 °C oder höher umfasst.

3. Sekundärbatterie mit nicht-wässrigem Elektrolyten gemäß Anspruch 1 oder 2, wobei das Stromerzeugungselement eine Struktur aufweist, die durch ein Außengehäuse versiegelt ist, und ein Innenvolumen des Außengehäuses größer als ein Volumen des Stromerzeugungselements ist.

4. Sekundärbatterie mit nicht-wässrigem Elektrolyten gemäß einem der Ansprüche 1 bis 3, wobei die Aktivmaterialschicht der negativen Elektrode eine rechteckige Form aufweist und eine Länge einer kurzen Seite der rechteckigen Form 100 mm oder mehr beträgt.

5. Sekundärbatterie mit nicht-wässrigem Elektrolyten gemäß einem der Ansprüche 1 bis 4, wobei ein Aspektverhältnis einer Elektrode, das durch ein Längs-/Quer-Verhältnis einer Aktivmaterialschicht der positiven Elektrode mit einer rechteckigen Form definiert ist, 1 bis 3 beträgt.

6. Sekundärbatterie mit nicht-wässrigem Elektrolyten gemäß einem der Ansprüche 1 bis 5, wobei das wässrige Bindemittel wenigstens ein Bindemittel auf Kautschukbasis, ausgewählt aus der Gruppe bestehend aus einem Styrol-Butadien-Kautschuk, einem AcrylnitrilButadien-Kautschuk, einem Methylmethacrylat-Butadien-Kautschuk und einem Methylmethacrylat-Kautschuk, umfasst.

7. Sekundärbatterie mit nicht-wässrigem Elektrolyten gemäß Anspruch 6, wobei das wässrige Bindemittel einen Styrol-Butadien-Kautschuk umfasst.

## Revendications

1. Batterie auxiliaire à électrolyte non aqueux de type plat comprenant :
un élément générateur d'énergie comprenant
une électrode positive obtenue par une formation d'une couche de matériau actif d'électrode positive sur une surface d'un collecteur de courant d'électrode positive,
une électrode négative obtenue par une formation d'une couche de matériau actif d'électrode négative sur une surface d'un collecteur de courant d'électrode négative, et
un séparateur, dans laquelle
la couche de matériau actif d'électrode négative comprend un liant aqueux,
une couche hautement poreuse affichant une porosité qui est supérieure à celle du séparateur est placée entre la couche de matériau actif d'électrode négative et le séparateur, la porosité de la couche hautement poreuse étant de 50 à 90 %,
un rapport d'une épaisseur de la couche hautement poreuse sur une épaisseur de la couche de matériau actif d'électrode négative se situe entre 0,01 et 0.4, et
un rapport d'une surface de batterie sur une capacité nominale est de 5 cm2/Ah ou plus, la surface de batterie représentant la valeur maximale de surface projetée de la batterie incluant un boîtier externe de la batterie, et la capacité nominale est de 3 Ah ou plus.

2. La batterie auxiliaire à électrolyte non aqueux selon la revendication 1,
dans laquelle la couche hautement poreuse comprend des particules résistantes à la chaleur affichant un point de fusion ou un point de ramollissement thermique de 150°C ou supérieur.

3. La batterie auxiliaire à électrolyte non aqueux selon la revendication 1 ou 2,
dans laquelle l'élément générateur d'énergie présente une structure scellée par un boîtier externe et un volume interne du boîtier externe est supérieur à un volume de l'élément générateur d'énergie.

4. La batterie auxiliaire à électrolyte non aqueux selon l'une quelconque des revendications 1 à 3,
dans laquelle la couche de matériau actif d'électrode négative présente une forme rectangulaire et une longueur d'un côté court de la forme rectangulaire est de 100 mm ou plus.

5. La batterie auxiliaire à électrolyte non aqueux selon l'une quelconque des revendications 1 à 4,
dans laquelle un allongement d'une électrode définie par un rapport longitudinal/transversal d'une couche de matériau actif d'électrode positive de forme rectangulaire va de 1 à 3.

6. La batterie auxiliaire à électrolyte non aqueux selon l'une quelconque des revendications 1 à 5,
dans laquelle le liant aqueux comprend au moins un liant à base de caoutchouc sélectionné dans le groupe consistant en un caoutchouc styrène-butadiène, un caoutchouc acrylonitrile-butadiène, un caoutchouc méthacrylate de méthyle, butadiène et styrène, et un caoutchouc méthacrylate de méthyle.

7. La batterie auxiliaire à électrolyte non aqueux selon la revendication 6, dans laquelle le liant aqueux comprend un caoutchouc styrène- butadiène.
